# EUROPÄISCHE PATENTSCHRIFT

(11) **EP 4 016 481 B1**
(45) Veröffentlichungstag und Bekanntmachung des Hinweises auf die Patenterteilung: **02.08.2023**
(21) Anmeldenummer: 21207885.1
(22) Anmeldetag: 12.11.2021
(51) Int. Cl.: G07C 5/08, G07C 5/00, G01C 3/00, G01S 19/21

(54) **TACHOGRAPHENVORRICHTUNG MIT LÄNDERSPEZIFISCHEN FUNKTIONEN, FAHRZEUG UMFASSEND ZUMINDEST EINE TACHOGRAPHENVORRICHTUNG UND VERFAHREN ZUM BETREIBEN EINER TACHOGRAPHENVORRICHTUNG**
TACHOGRAPH DEVICE WITH COUNTRY-SPECIFIC FUNCTIONS, VEHICLE COMPRISING AT LEAST ONE TACHOGRAPH DEVICE AND METHOD FOR OPERATING A TACHOGRAPH DEVICE
DISPOSITIF TACHYGRAPHE AYANT DES FONCTIONS SPÉCIFIQUES AU PAYS, VÉHICULE COMPRENANT AU MOINS UN DISPOSITIF TACHYGRAPHE ET PROCÉDÉ DE FONCTIONNEMENT D'UN DISPOSITIF TACHYGRAPHE

(30) Priorität: 18.12.2020 DE 102020216301
(43) Veröffentlichungstag der Anmeldung: 22.06.2022
(73) Patentinhaber: Continental Automotive Technologies GmbH, 30165 Hannover (DE)
(72) Erfinder: Dohmen, Ralf, 60488 Frankfurt am Main (DE); Ketterer, Timo, 60488 Frankfurt am Main (DE)
(74) Vertreter: Continental Corporation

(56) Entgegenhaltungen:
- WO-A1-2016/068779
- DE-A1-102006 036 066
- DE-A1-102008 048 162
- US-A1- 2016 154 112
- US-B2- 8 706 318
- Unknown: "GNSS User Technology Report EDITOR'S SPECIAL ON SPACE DATA FOR EUROPE", , 19. Oktober 2020 (2020-10-19), XP055766411, Gefunden im Internet: URL:https://www.gsa.europa.eu/sites/defaul t/files/uploads/technology_report_2020.pdf [gefunden am 2021-01-19]
- CUCCHI L ET AL: "A GNSS Jamming/Spoofing Test Suite for Smart Tachograph Applications", GNSS 2020 - PROCEEDINGS OF THE 33RD INTERNATIONAL TECHNICAL MEETING OF THE SATELLITE DIVISION OF THE INSTITUTE OF NAVIGATION (ION GNSS+ 2020), THE INSTITUTE OF NAVIGATION, 8551 RIXLEW LANE SUITE 360 MANASSAS, VA 20109, USA, 25. September 2020 (2020-09-25), Seiten 1490-1514, XP056016313, DOI: 10.33012/2020.17759

## Beschreibung

Die Erfindung betrifft eine Tachographenvorrichtung mit länderspezifischen Funktionen, ein Fahrzeug, das zumindest eine Tachographenvorrichtung mit länderspezifischen Funktionen umfasst, und ein Verfahren zum Betreiben einer Tachographenvorrichtung mit länderspezifischen Funktionen.

Zwischen einzelnen Ländern bestehen Unterschiede in der Verkehrsgesetzgebung, wodurch sich die Vorschriften beispielsweise bezüglich einer Beleuchtung, eines Alarmsignals bei einer Rückwärtsfahrt oder des Martinshorns unterscheiden. Diese Vorschriften müssen durch die Hersteller bei der Produktion eines Fahrzeugs für das jeweilige Land beachtet werden. Hardwarekomponenten sind dabei aufgrund der fehlenden Anpassbarkeit an ein Land gebunden. Fahrzeugfunktionen, die sich auf eine Software beziehen, sind dagegen flexibler. Dadurch ist es möglich, die Fahrzeugfunktionen durch einfache Softwareanpassungen ab Werk an die jeweils geltenden Vorschriften anzupassen.

Um ein Fahrzeug für den grenzüberschreitenden Verkehr zu optimieren, ist es möglich und verbreitet, für die einzelnen Länder jeweilige Konfigurationen bereitzustellen, in denen die Fahrzeugfunktionen auf die jeweiligen nationalen Gesetze abgestimmt sind. In Abhängigkeit von dem momentanen Aufenthaltsort wird automatisch die Konfiguration ausgewählt, die den Vorschriften des Landes entspricht. Die Bestimmung des momentanen Aufenthaltsorts erfolgt in der Regel unter einer Nutzung globaler satellitengestützter Navigationssysteme (Global Satellite Navigation Systems, GNSS) wie GPS, Galileo oder GLONASS. Dadurch wird einem Fahrer eine manuelle Umstellung der Konfiguration bei einem Grenzübertritt erspart.

Neben den unterschiedlichen nationalen Bestimmungen in Bezug auf das Fahrzeug sind insbesondere arbeitsrechtliche Unterschiede zwischen einzelnen Ländern für Spediteure relevant. Diese betreffen insbesondere die maximal zulässigen Lenkzeiten und die Berechnung der Lenkzeiten. Diese Unterschiede sind durch die Tachographen zu berücksichtigen.

Das Problem bei der automatischen Wahl der Konfiguration in Abhängigkeit von einer mittels satellitengestützter Navigationssysteme bestimmten Position ist die Möglichkeit einer Fehllokalisierung. Dies kann beispielsweise aufgrund schlechter Empfangsbedingungen auftreten, wenn Satellitensignale einer Mindestzahl an Satelliten nicht empfangen werden können. Diese, oft durch Abschattungen hervorgerufenen Empfangsprobleme, treten insbesondere in Gebirgen, Wäldern oder bebauten Bereichen auf. Dadurch kann es sein, dass die Position nicht oder nur ungenau bestimmt werden kann.

Ein weiterer Grund für eine Fehllokalisierung kann eine missbräuchliche Manipulation des Empfängers sein. Bei dieser Manipulation, die unter dem Begriff GNSS-Spoofing bekannt ist, werden durch ein Manipulationsgerät manipulierte Satellitensignale ausgesandt, welche derart gewählt sind, dass durch den Empfänger ein vorbestimmter falscher Ort erfasst wird. Diese Manipulation ist möglich, weil derzeit keine Sicherungsfunktionen bei satellitengestützten Signalen bereitgestellt werden, welche eine Authentifizierung der Satellitensignale ermöglichen. Dadurch kann nicht festgestellt werden, ob die empfangenen Satellitensignale von einem Satelliten stammen oder von einem Manipulationsgerät. Dadurch ist es beispielsweise möglich, eine Position eines Fahrzeugs in einem Land vorzutäuschen, das für einen Spediteur vorteilhaftere Regelungen in Bezug auf Lenkzeiten hat. Diese Manipulation lässt sich auch nicht anhand der aufgezeichneten Daten in jedem Fall nachträglich nachweisen. In Bezug auf aktive Fahrzeugfunktionen kann es insbesondere bei Unfällen erforderlich sein, zuverlässig feststellen zu können, ob zu einem bestimmten Zeitpunkt eine gesetzlich vorgeschriebene Funktion aktiviert war.

Eine Möglichkeit, Störungen in einer Tachographenanordnung zu erkennen, ist beispielsweise in der DE 10 2017 222 320 A1 offenbart. Diese beschreibt eine Tachographenanordnung und ein Verfahren zum Betreiben Tachographenanordnung. Die Tachographenanordnung weist einen Tachographen und ein externes Gerät auf. Der Tachograph umfasst eine Tachographeneinheit, die dazu eingerichtet ist, eine drahtlose Verbindung zu dem externen Gerät herzustellen, um Signale von dem externen Gerät zu empfangen. Der Tachograph weist eine Kontrolleinheit auf, die dazu ausgebildet ist zu detektieren, ob mittels der Tachographeneinheit des Tachographens Signale empfangen werden, um im Zusammenhang mit den empfangenen Signalen zu überprüfen, ob eine Störung vorliegt. Dabei ist es vorgesehen, dass die Kontrolleinheit dazu eingerichtet ist, eine Störung zu erkennen und eine Warnung auszugeben, wenn entweder die Tachographeneinheit Signale empfängt und der wenigstens eine Parameter vorgegebene Voraussetzungen erfüllt oder wenn die Tachographeneinheit zu wenige Signale empfängt oder die Empfangsfeldstärken der empfangenen Signale einen vorgegebenen Schwellenwert unterschreiten und der wenigstens eine Parameter vorgegebene Voraussetzungen erfüllt.

Eine Möglichkeit, die Genauigkeit und Zuverlässigkeit einer Lokalisierung zu erhöhen ist beispielsweise in der DE 10 2017 202 991 A1 offenbart. Diese beschreibt eine On-Board-Unit für ein Kraftfahrzeug mit einer GNSS-Antenne und einer GNSS-Empfangsvorrichtung zur Ermittlung der Position des Kraftfahrzeugs durch ein satellitengestütztes Ortungssystem. Dabei ist es vorgesehen, dass die GNSS-Antenne eine linear polarisierte Antenne ist und für den Empfang von GNSS-Signalen aus mehreren GNS-Systemen geeignet ist und dass die Empfangsvorrichtung derart gestaltet ist, dass sie die GNSS-Signale aus mehreren verschiedenen GNS-System empfangen kann und in Abhängigkeit von einer Verfügbarkeit von empfangenen GNSS-Signalen und/oder der Signalgüte von empfangenen GNSS-Signalen entscheidet, welche der empfangenen GNSS-Signale zur Bestimmung der Position verwendet werden sollen.

In der DE 10 2008 025 065 A1 sind ein Verfahren und ein System zur Übertragung von Daten offenbart. Es betrifft ein Verfahren zur Übertragung von Daten über einen Übertragungsweg zwischen mindestens einem in einem Fahrzeug angeordneten Fahrtenschreiber und einer von dem Fahrzeug beanstandeten Datenverarbeitungsanlage. Das Verfahren sieht vor, dass eine drahtlose Datenübertragung zwischen dem Fahrtenschreiber und der Datenverarbeitung Anlage hergestellt wird, um Aktualisierungsdaten und eine Wartung des Fahrtenschreibers zu ermöglichen.

Die DE 10 2008 048 162 A1 beschreibt ein System, das einen Tachographen und eine On-Board-Unit umfasst. Das System weist eine Positionsermittlungseinrichtung und/oder eine Funkkommunikationseinrichtung auf, die zur Nutzung durch die On-Board-Unit mit der On-Board-Unit koppelbar sind. Die On-Board-Unit weist mindestens eine Funktion zur Mauterfassung, zur Ereignisdatenerfassung, zur Notrufabsetzung, zur Transportüberwachung, zur Fahrzeugkursüberwachung oder zum Flottenmanagement auf.

Es ist eine Aufgabe der Erfindung, eine Möglichkeit bereitzustellen, welche eine manipulationsgeschützte Aktivierung und Protokollierung von Funktionen ermöglicht.

Durch die Erfindung wird eine Tachographenvorrichtung mit länderspezifischen Funktionen bereitgestellt. Bei der Tachographenvorrichtung kann es sich insbesondere um einen digitalen Fahrtenschreiber für ein Fahrzeug handeln, welcher zur Anordnung in einem Fahrzeug vorgesehen sein kann. Die Tachographenvorrichtung weist eine Empfangseinrichtung auf, die dazu eingerichtet ist, Satellitensignale zu empfangen und aus den Satellitensignalen eine momentane geographische Position zu bestimmen. Mit anderen Worten handelt es sich bei der Empfangseinrichtung um einen Empfänger, der für ein satellitengestütztes Navigationssystem eingerichtet ist, um aus den empfangenen Satellitensignalen die aktuelle geographische Position des Empfangsortes zu bestimmen. Die Tachographenvorrichtung weist eine Schalteinrichtung auf, die dazu eingerichtet ist, vorbestimmte Funktionen eines Fahrzeugs zu schalten. Mit anderen Worten ist die Schalteinrichtung der Tachographenvorrichtung dazu eingerichtet, bestimmte Funktionen des Fahrzeugs, in welchem die Tachographenvorrichtung angeordnet sein kann, zu aktivieren, zu deaktivieren oder anzupassen. Die Funktionen können beispielsweise ein Tagfahrlicht betreffen, das in manchen Ländern obligatorisch ist, oder eine Auswahl eines akustischen Rückfahrwarnzeichens. Die Tachographenvorrichtung weist eine Zuordnungseinheit auf, in der geographische Bereiche definiert sind. Den jeweiligen geographischen Bereichen ist jeweils eine Konfiguration, umfassend die innerhalb des jeweiligen geographischen Bereichs zu aktivierenden Funktionen zugewiesen. Mit anderen Worten sind in der Zuordnungseinheit geographische Bereiche gespeichert, die einen durch Geokoordinaten definierten Bereich darstellen. Dabei kann es sich beispielsweise um die Flächen von Nationalstaaten handeln. Für die jeweiligen geographischen Bereiche existiert eine jeweilige Konfiguration, welche definiert, welche Funktionen der Tachographenvorrichtung in dem jeweiligen geographischen Bereich aktiviert oder deaktiviert sind. Die Konfigurationen können auf nationale oder regionale Gesetze abgestimmt sein. Die Zuordnungseinheit ist dazu eingerichtet, denjenigen der geographischen Bereiche zu erfassen, in welchem sich die momentane geographische Position befindet, und die Schalteinrichtung der Tachographenvorrichtung gemäß der jeweiligen zugewiesenen Konfiguration anzusteuern. Mit anderen Worten ist die Zuordnungseinheit dazu eingerichtet zu ermitteln, in welchem der geographischen Bereiche sich die momentane geographische Position befindet. Die Zuordnungseinheit steuert die Schalteinrichtung der Tachographenvorrichtung an, um die Funktionen gemäß der Vorgaben der Konfiguration zu aktivieren oder zu deaktivieren. Es ist vorgesehen, dass die Zuordnungseinheit als kryptographisches Sicherheitsmodul eingerichtet ist. Bei der Zuordnungseinheit gemäß vorliegender Erfindung handelt es sich um einen Schaltkreis, der dazu eingerichtet ist, kryptographische Verfahren anzuwenden, um eine Manipulation der durchzuführenden Verfahren oder der in der Zuordnungseinheit gespeicherten Daten zu verhindern. Dadurch ergibt sich der Vorteil, dass beispielsweise eine Manipulation der Konfigurationen in der Zuordnungseinheit, mit dem Ziel bestimmte Funktionen zu deaktivieren verhindert werden kann.

Die Empfangseinrichtung ist dazu eingerichtet, Satellitensignale zu empfangen, deren Ursprung authentisiert werden kann. Mit anderen Worten ist die Empfangseinrichtung dazu eingerichtet, Satellitensignale zu empfangen, die Merkmale aufweisen, die eine Authentifizierung des Signalsatellitensignals ermöglichen. Hierbei kann es sich um sogenanntes secured GNSS, wie beispielsweise Galileo OSNMA (Open Service Navigation Message Authentication) handeln. Dadurch kann sichergestellt werden, dass die Satellitensignale von einem Satelliten des satellitengestützten Navigationssystems ausgesandt wurden und nicht von einem Manipulationsgerät.

Durch die Erfindung ergibt sich der Vorteil, dass eine Tachographenvorrichtung bereitgestellt wird, die eine zuverlässige Schaltung länderspezifischen Funktionen ermöglicht.

Die Erfindung umfasst auch Weiterbildungen, durch die sich weitere Vorteile ergeben.

Eine Weiterbildung der Erfindung sieht vor, dass die Empfangseinrichtung zum Empfangen von abgesicherten Satellitensignalen nach dem Galileo Open Service Navigation Message Authentication Standard eingerichtet ist. Mit anderen Worten ist die Empfangseinrichtung dazu eingerichtet, eine Authentizität der empfangenen Satellitensignale durch das Navigation Message Authentication Standard Verfahren zu überprüfen. Dadurch ergibt sich der Vorteil, dass die Authentizität eines Signals durch einen freien Standard in Europa überprüft werden kann.

Eine Weiterbildung der Erfindung sieht vor, dass die Tachographenvorrichtung dazu eingerichtet ist, die aktiven Funktionen auf einer kryptographisch gesicherten Datenspeichereinrichtung der Tachographenvorrichtung zu protokollieren. Mit anderen Worten ist die Tachographenvorrichtung dazu eingerichtet, zu speichern, zu welchem Zeitpunkt eine jeweilige Funktion aktiviert ist und das Protokoll auf dem kryptographisch gesicherten Datenspeicher zu speichern. Bei dem kryptographisch gesicherten Datenspeicher kann es sich um ein Sicherheitsmodul handeln, welches mittels kryptographischer Verfahren gegen eine Manipulation gesichert ist und in denen die gespeicherten Protokolle verschlüsselt gespeichert sind. Dadurch ergibt sich der Vorteil, dass eine gegen Manipulationen geschützte Protokollierung der Aktivitätszustände der Funktionen sichergestellt werden kann. Es lässt sich somit nachträglich zuverlässig nachvollziehen, ob eine vorbestimmte Funktionen zu einem vorbestimmten Zeitpunkt aktiviert oder deaktiviert war. Dies ermöglicht insbesondere eine Nachvollziehbarkeit im Fall von Unfällen.

Eine Weiterbildung der Erfindung sieht vor, dass die Tachographenvorrichtung dazu eingerichtet ist, das Protokoll über die aktiven Funktionen auf der Datenspeichereinrichtung an einer Schnittstelle der Tachographenvorrichtung bereitzustellen. Mit anderen Worten ist es durch die Schnittstelle ermöglicht, dass auf das in der Datenspeichereinrichtung gesicherte Protokoll über die aktiven Funktionen zugegriffen werden kann. Dadurch ergibt sich der Vorteil, dass es externen Geräten möglich ist zu ermitteln, welche Funktion zu einem vorbestimmten Zeitpunkt aktiv war. Die Schnittstelle kann für einen physischen Zugriff mittels einer Steckverbindung oder eine kabellose Verbindung über Funk ausgelegt sein.

Eine Weiterbildung der Erfindung sieht vor, dass die Datenschnittstelle dazu eingerichtet ist, ein vorbestimmtes Berechtigungsüberprüfungsverfahren durchzuführen, um eine Berechtigung eines Zugriffs auf die Datenspeichereinheit zu überprüfen. Mit anderen Worten ist es erforderlich, dass eine Berechtigung eines Nutzers, der auf das in der Datenspeichereinheit gespeicherte Protokoll zugreifen möchte, durch das Berechtigungsüberprüfungsverfahren bestätigt werden muss, bevor ihm ein Zugriff auf das Protokoll gewährt wird. Es kann vorgesehen sein, dass das Berechtigungsüberprüfungsverfahren eine Authentifizierung des Benutzers mittels eines Schlüssels eines Schlüsselpaares erfordert. Zudem kann es vorgesehen sein, dass dem Nutzer vorbestimmte Rechte zugewiesen sein müssen, damit ihm der Zugriff gewährt wird. Dadurch ergibt sich der Vorteil, dass ein Auslesen des Protokolls auf berechtigte Kreise beschränkt werden kann.

Eine Weiterbildung der Erfindung sieht vor, dass die Tachographenvorrichtung dazu eingerichtet ist, eine Lenkzeit oder eine Arbeitszeit in Abhängigkeit von dem geographischen Bereich, in dem sich die momentane geographische Position befindet, zu protokollieren. Mit anderen Worten ist für die jeweiligen geographischen Bereiche in der Tachographenvorrichtung vorgegeben, wie die Lenkzeit oder die Arbeitszeit durch die Tachographeneinrichtung erfasst werden, wenn die momentane geographische Position in dem jeweiligen Bereich lokalisiert wird. Es kann beispielsweise vorgesehen sein, dass Beladevorgänge und Entladevorgänge, in Abhängigkeit von dem Land in dem sich das Fahrzeug befindet, als Fahrzeit oder als Ruhezeit erfasst werden. Befindet sich das Fahrzeug während der Beladevorgänge oder der Entladevorgänge in einem der Bereiche, werden diese Zeiten entsprechend der Vorgaben für den Bereich erfasst. Es kann auch sein, dass eine Überschreitung einer zulässigen Lenkzeit in Abhängigkeit von einem Maximalwert erfasst wird, der von dem geographischen Bereich abhängt, in dem sich das Fahrzeug momentan befindet.

Eine Weiterbildung der Erfindung sieht vor, dass die Schalteinrichtung dazu eingerichtet ist, Funktionen über ein Fahrzeugnetzwerk des Fahrzeugs zu schalten. Mit anderen Worten ist die Schalteinrichtung dazu eingerichtet, Signale aus einem Fahrzeugnetzwerk zu empfangen und an das Fahrzeugnetzwerk zu versenden, um einzelne Funktionen in dem Fahrzeug zu aktivieren oder zu deaktivieren.

Eine Weiterbildung der Erfindung sieht vor, dass die Schalteinrichtung dazu eingerichtet ist, Funktionen über ein als CAN-BUS-Netzwerk aufgebautes Fahrzeugnetzwerk des Fahrzeugs zu schalten. Mit anderen Worten umfasst die Schalteinrichtung eine Schnittstelle zu dem CAN-BUS-Netzwerk des Fahrzeugs. Dadurch ergibt sich der Vorteil, dass die Tachographenvorrichtung an ein CAN-BUS-Fahrzeugnetzwerk angebunden werden kann.

Die Erfindung umfasst auch ein Fahrzeug mit einer Tachographeneinrichtung. Bei dem Fahrzeug kann es sich insbesondere um einen Lastkraftwagen, allgemein ein Nutzfahrzeug, oder einen Personenkraftwagen handeln.

Die Erfindung umfasst auch ein Verfahren zum Betreiben einer Tachographenvorrichtung mit länderspezifischen Funktionen. In dem Verfahren ist es vorgesehen, dass durch eine Empfangseinrichtung der Tachographenvorrichtung, die zum Empfangen von gegen Manipulationen abgesicherten Satellitensignalen eingerichtet ist, Satellitensignale empfangen und aus den Satellitensignalen eine momentane geographische Position bestimmt wird. Durch eine als kryptographisches Sicherheitsmodul eingerichtete Zuordnungseinheit, die als Schaltkreis dazu eingerichtet ist, kryptographische Verfahren anzuwenden, um eine Manipulation der durchzuführenden Verfahren oder der in der Zuordnungseinheit gespeicherten Daten zu verhindern, und in der geographische Bereiche definiert sind, wird derjenige der geographischen Bereiche erfasst wird, in welchem sich die momentane geographische Position befindet. Den jeweiligen geographischen Bereichen sind jeweils eine Konfiguration, umfassend die innerhalb des jeweiligen geographischen Bereichs zu aktivierenden Funktionen, zugewiesen. Durch die Zuordnungseinheit wird eine Schalteinrichtung der Tachographenvorrichtung gemäß der jeweiligen zugewiesenen Konfiguration angesteuert wird, um vorbestimmte Funktionen des Fahrzeugs zu schalten.

Zu der Erfindung gehören auch Weiterbildungen des erfindungsgemäßen Fahrzeugs und des erfindungsgemäßen Verfahrens, die Merkmale aufweisen, wie sie bereits im Zusammenhang mit den Weiterbildungen der erfindungsgemäßen Tachographenvorrichtung beschrieben worden sind. Aus diesem Grund sind die entsprechenden Weiterbildungen des erfindungsgemäßen Fahrzeugs und des erfindungsgemäßen Verfahrens hier nicht noch einmal beschrieben.

Die Erfindung umfasst auch die Kombinationen der Merkmale der beschriebenen Ausführungsformen.

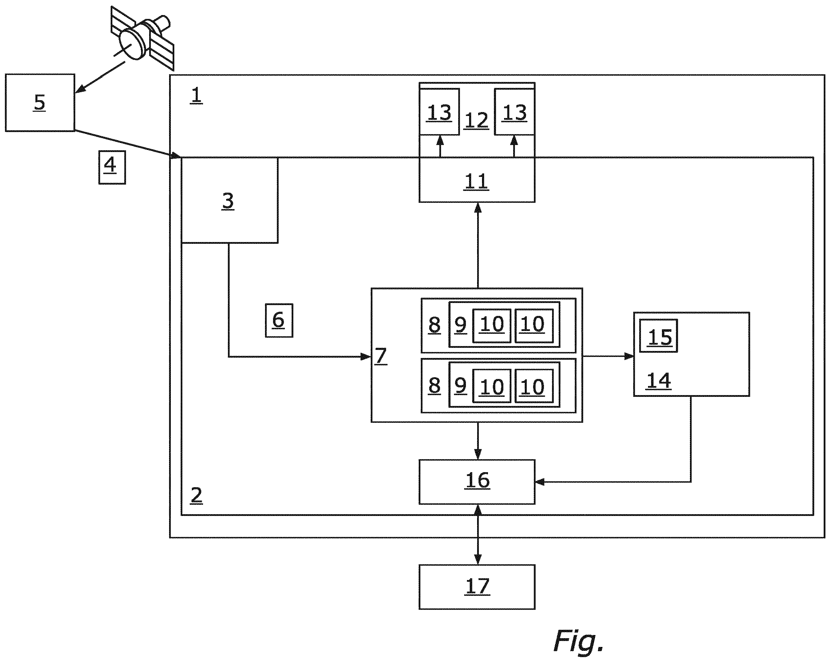

Im Folgenden ist ein Ausführungsbeispiel der Erfindung beschrieben. Hierzu zeigt die einzige Figur (Fig.) eine Tachographenvorrichtung mit länderspezifischen Funktionen.

Bei dem im Folgenden erläuterten Ausführungsbeispiel handelt es sich um eine bevorzugte Ausführungsform der Erfindung. Des Weiteren ist die beschriebene Ausführungsform auch durch weitere der bereits beschriebenen Merkmale der Erfindung ergänzbar. In der Figur sind funktionsgleiche Elemente jeweils mit denselben Bezugszeichen versehen.

Die Figur zeigt ein Fahrzeug 1, das zumindest eine Tachographenvorrichtung 2 mit länderspezifischen Funktionen 10 umfasst. Die Tachographenvorrichtung 2 kann dazu vorgesehen sein, Drehzahlen eines Drehzahlsensors des Fahrzeugs 1 zu erfassen und zu protokollieren. Die Tachographenvorrichtung 2 kann eine Empfangseinrichtung 3 aufweisen, die dazu eingerichtet ist, Satellitensignale 4 eines satellitengestützten Navigationssystems 5 zu empfangen. Diese Satellitensignale 4 können Merkmale aufweisen, die eine Authentifizierung der Satellitensignale 4 ermöglichen. Somit ist es möglich sicherzustellen, dass die Satellitensignale 4 durch das satellitengestützte Navigationssystem 5 und nicht durch ein Manipulationsgerät ausgesandt wurden.

Die Empfangseinrichtung 3 kann aus den empfangenen Satellitensignalen 4 eine momentane geographische Position 6 ermitteln, an welcher sich die Tachographenvorrichtung 2 im Moment befindet. Die Tachographenvorrichtung 2 kann eine Zuordnungseinheit 7 aufweisen, in der geographische Bereiche 8 definiert sind. Dabei kann es sich um die geographischen Lagen unterschiedlicher Länder handeln. Den jeweiligen geographischen Bereichen 8 kann eine jeweilige Konfiguration 9 zugewiesen sein. In den jeweiligen Konfigurationen 9 können Funktionen 10 des Fahrzeugs 1 oder der Tachographenvorrichtung 2 definiert sein, welche innerhalb des jeweiligen geographischen Bereichs 8 zu aktivieren sind. Die Funktionen können das Fahrzeug 1, insbesondere eine Beschaffenheit von Warntönen und die Fahrzeugbeleuchtung betreffen und von den Gesetzen des jeweiligen Landes abhängen.

Um eine Manipulation der Konfigurationen 9 in der Zuordnungseinheit 7 zu verhindern, kann die Zuordnungseinheit 7 als kryptographisches Sicherheitsmodul eingerichtet sein. Um die jeweiligen Funktionen 10 aktivieren zu können, kann die Zuordnungseinheit 7 eine Schalteinrichtung 11 der Tachographenvorrichtung 2 ansteuern. Wird durch die Empfangseinrichtung 3 eine momentane geographische Position 6 ermittelt, kann diese der Zuordnungseinheit 7 weitergeleitet werden. Die Zuordnungseinheit 7 kann die momentane geographische Position 6 dem geographischen Bereich 8 zuordnen, in welchem sie sich befindet. Entsprechend dem ermittelten Bereich 8 kann es vorgesehen sein, dass die Zuordnungseinheit 7 die Schalteinrichtung 11 ansteuert, um die vorgegebenen Funktionen 10 in dem Fahrzeug 1 oder der Tachographenvorrichtung 2 zu aktivieren. Die Funktionen 10 können beispielsweise eine Art eines akustischen Rückfahralarmsignals oder eine Tagfahrlichtfunktion des Fahrzeugs 1 betreffen. Die Schalteinrichtung 11 kann entsprechend der Ansteuerung durch die Zuordnungseinheit 7 beispielsweise über ein Fahrzeugnetzwerk 12, welches beispielsweise als Ethernet, Lin-BUS oder CAN-BUS Netzwerk eingerichtet sein kann, die jeweiligen Fahrzeugkomponenten 13 ansteuern, um die Funktionen 10 zu aktivieren oder zu deaktivieren. Es kann auch vorgesehen sein, dass durch die Zuordnungseinheit 7 eine Art der Zeiterfassung von Fahr- oder Lenkzeiten durch die Tachographenvorrichtung 2 verändert wird. Dies kann insbesondere eine landesabhängige Anrechnung von Verladezeiten betreffen. Für eine Nachvollziehbarkeit kann es insbesondere erforderlich sein, ein Protokoll 15 bereitzustellen, welches angibt, zu welchem Zeitpunkt jeweilige Funktionen 10 aktiviert waren. Um das Protokoll 15 gegen eine Manipulation sichern zu können, kann dieses in einer als Sicherheitsmodul eingerichteten Speichereinrichtung14 gespeichert sein.

Um eine Zugriffsmöglichkeit für berechtigte Nutzer 17 bereitzustellen, kann die Tachographenvorrichtung 2 eine Datenschnittstelle 16 aufweisen, welche ein Abrufen oder Herunterladen des Protokolls 15 ermöglicht. Die Datenschnittstelle 16 kann für ein drahtloses Funknetzwerk oder für einen physischen Zugriff eingerichtet sein. Es kann vorgesehen sein, dass die Datenschnittstelle 16 dazu eingerichtet ist, ein vorbestimmtes Berechtigungsüberprüfungsverfahren durchzuführen, um eine Berechtigung eines Zugriffs auf die Speichereinrichtung14 zu überprüfen. Dadurch kann sichergestellt werden, dass nur zulässige Nutzer 17 auf das Protokoll 15 zugreifen können. Das vorbestimmte Berechtigungsüberprüfungsverfahren kann beispielsweise eine Authentifizierung über einen Schlüssel eines Schlüsselpaares umfassen.

Länderspezifische Fahrzeugfunktionen werden zurzeit entweder durch eine Hardware- oder Softwarekonfiguration festgelegt. Durch diese feste Konfiguration ist sichergestellt, dass nationale Funktionen verfügbar sind. Beispiele für länderspezifische Funktionen sind z. B. das Alarmsignal beim Rückwärtsfahren oder das Martinshorn/Blaulicht. Automatische Konfigurationen, die auf satellitengestützten Positionsdaten basieren, sind ebenfalls möglich. Diese basieren auf Satellitenempfängern (GPS, GNSS, Galileo, Glonass, etc.), die die Positionsdaten zur Verfügung stellen. Jedoch fehlt eine Sicherheitsüberprüfung, weil die Satellitensignale zurzeit noch keine geschützten Daten übertragen.

Bei automatischen Konfigurationen, die auf satellitengestützte Positionsdaten basieren, besteht das Problem, dass die Positionsdaten nicht zuverlässig sind, d. h. es kann nicht überprüft werden, ob das Signal tatsächlich von einem Satelliten stammt oder von einem Manipulationsgerät.

Mit der Einführung eines sicheren Satellitensignals können länderspezifische Funktionen vom Tachographen aktiviert oder deaktiviert werden.

Dadurch, dass der Tachograph ein europäisches Sicherheitsprodukt und darüber hinaus ein Gesetzeserfüller ist, können neben den Steuersignalen auch länderspezifische Funktionen zur Überwachung bzw. zum Aufzeichnen der Signale implementiert werden. Somit ist ein eindeutiger Nachweis hinsichtlich der länderspezifischen Verfügbarkeit dieser Funktionen möglich.

Eine Tachographenvorrichtung besitzt z. B. einen "sicheren Satellitenempfänger" (secure GNSS receiver), eine sichere Sicherheitssteuereinheit "secure uC", einen sicheren Datenspeicher "secure data recorder", eine Schaltereinheit und eine Datenschnittstelle zum Herunterladen von Daten. Die durch den secure GNSS receiver verifizierten und für gültig erklärten Positionsdaten werden einer im Sicherheitscontroller befindlichen Funktion zugeführt, die die Zuordnung von Positionsdaten zum Land durchführt. Der Sicherheitscontroller entscheidet anhand dieser Länderfunktion, ob ein Schalter betätigt wird, der länderspezifische Funktionen ein- bzw. ausschaltet. Weiterhin wird in einem Datenrecorder aufgezeichnet, welche Funktion ein- bzw. ausgeschaltet ist. Diese Information kann einer Datenschnittstelle zur Verfügung gestellt werden, damit z.B. eine Behörde oder ein Unternehmen feststellen kann, ob eine länderspezifische Funktion zu einem Zeitpunkt aktiviert oder deaktiviert war.

Insgesamt zeigt das Beispiel, wie durch die Erfindung eine Aktivierung von länderspezifischen Funktionen durch einen Tachographen bereitgestellt werden kann.

## Patentansprüche

1. Tachographenvorrichtung (2) mit länderspezifischen Funktionen (10), wobei
- die Tachographenvorrichtung (2) eine Empfangseinrichtung (3) aufweist, die dazu eingerichtet ist, Satellitensignale (4) zu empfangen und aus den Satellitensignalen (4) eine momentane geographische Position (6) zu bestimmen,
- die Tachographenvorrichtung (2) eine Schalteinrichtung (11) aufweist, die dazu eingerichtet ist, vorbestimmte Funktionen (10) eines Fahrzeugs (1) zu schalten,
- die Tachographenvorrichtung (2) eine Zuordnungseinheit (7) aufweist, in der geographische Bereiche (8) definiert sind, wobei den jeweiligen geographischen Bereichen (8) jeweils eine Konfiguration (9), umfassend die innerhalb des jeweiligen geographischen Bereichs (8) zu aktivierenden Funktionen (10), zugewiesen ist,
- die Zuordnungseinheit (7) dazu eingerichtet ist, denjenigen der geographischen Bereiche (8) zu erfassen, in welchem sich die momentane geographische Position (6) befindet, und die Schalteinrichtung (11) der Tachographenvorrichtung (2) gemäß der jeweiligen zugewiesenen Konfiguration (9) anzusteuern, **dadurch gekennzeichnet, dass** die Zuordnungseinheit (7) als kryptographisches Sicherheitsmodul eingerichtet ist, die als Schaltkreis dazu eingerichtet ist, kryptographische Verfahren anzuwenden, die zmr eine Manipulation der durchzuführenden Verfahrensschritte oder der in der Zuordnungseinheit (7) gespeicherten Daten verhindern, und die Empfangseinrichtung (3) zum Empfangen von gegen Manipulationen abgesicherten Satellitensignalen (4) eingerichtet ist.

2. Tachographenvorrichtung (2) nach Anspruch 1,
**dadurch gekennzeichnet, dass** die Empfangseinrichtung (3) zum Empfangen von abgesicherten Satellitensignalen (4) nach dem Galileo Open Service Navigation Message Authentication Standard eingerichtet ist.

3. Tachographenvorrichtung (2) nach einem der vorhergehenden Ansprüche,
**dadurch gekennzeichnet, dass** die Tachographenvorrichtung (2) dazu eingerichtet ist, die aktiven Funktionen (10) auf einer kryptographisch gesicherten Datenspeichereinrichtung (14) der Tachographenvorrichtung (2) zu speichern.

4. Tachographenvorrichtung (2) nach einem der vorhergehenden Ansprüche,
**dadurch gekennzeichnet, dass** die Tachographenvorrichtung (2) dazu eingerichtet ist, die aktiven Funktionen (10) auf der Datenspeichereinrichtung (14) an einer Datenschnittstelle (16) der Tachographenvorrichtung (2) bereitzustellen.

5. Tachographenvorrichtung (2) nach einem der vorhergehenden Ansprüche,
**dadurch gekennzeichnet, dass** die Datenschnittstelle (16) dazu eingerichtet ist, ein vorbestimmtes Berechtigungsüberprüfungsverfahren durchzuführen, um eine Berechtigung eines Zugriffs auf die Datenspeichereinheit zu überprüfen.

6. Tachographenvorrichtung (2) nach einem der vorhergehenden Ansprüche,
**dadurch gekennzeichnet, dass** die Tachographenvorrichtung (2) dazu eingerichtet ist, eine Fahrzeit in Abhängigkeit des geographischen Bereichs (8) der momentanen geographischen Position (6) zu protokollieren.

7. Tachographenvorrichtung (2) nach einem der vorhergehenden Ansprüche,
**dadurch gekennzeichnet, dass** die Schalteinrichtung (11) dazu eingerichtet ist, Funktionen (10) über ein Fahrzeugnetzwerk (12) des Fahrzeugs (1) zu schalten.

8. Tachographenvorrichtung (2) nach einem der vorhergehenden Ansprüche,
**dadurch gekennzeichnet, dass** die Schalteinrichtung (11) dazu eingerichtet ist, Funktionen (10) über ein als CAN-BUS-Netzwerk aufgebautes Fahrzeugnetzwerk (12) des Fahrzeugs (1) zu schalten.

9. Fahrzeug (1), umfassend eine Tachographenvorrichtung (2) nach einem der vorhergehenden Ansprüche.

10. Verfahren zum Betreiben einer Tachographenvorrichtung (2) mit länderspezifischen Funktionen (10),
**dadurch gekennzeichnet, dass**
- durch eine Empfangseinrichtung (3) der Tachographenvorrichtung (2), die zum Empfangen von gegen Manipulationen abgesicherten Satellitensignalen (4) eingerichtet ist, Satellitensignale (4) empfangen und aus den Satellitensignalen (4) eine momentane geographische Position (6) bestimmt wird,
- durch eine als kryptographisches Sicherheitsmodul eingerichtete Zuordnungseinheit (7), die als Schaltkreis dazu eingerichtet ist, kryptographische Verfahren anzuwenden, um eine Manipulation der durchzuführenden Verfahrensschritte oder der in der Zuordnungseinheit gespeicherten Daten zu verhindern, und in der geographische Bereiche (8) definiert sind, wobei den jeweiligen geographischen Bereichen (8) jeweils eine Konfiguration (9), umfassend die innerhalb des jeweiligen geographischen Bereichs (8) zu aktivierenden Funktionen (10), zugewiesen ist, derjenige der geographischen Bereiche (8) erfasst wird, in welchem sich die momentane geographische Position (6) befindet, und eine Schalteinrichtung (11) der Tachographenvorrichtung (2) gemäß der jeweiligen zugewiesenen Konfiguration (9) angesteuert wird, um vorbestimmte Funktionen (10) des Fahrzeugs (1) zu schalten.

## Claims

1. Tachograph device (2) having country-specific functions (10), wherein
- the tachograph device (2) has a reception apparatus (3) that is configured to receive satellite signals (4) and to determine a current geographical position (6) from the satellite signals (4),
- the tachograph device (2) has a switching apparatus (11) that is configured to switch predetermined functions (10) of a vehicle (1),
- the tachograph device (2) has an assignment unit (7) in which geographical regions (8) are defined, wherein the respective geographical regions (8) are each allocated a configuration (9), comprising the functions (10) to be activated within the respective geographical region (8),
- the assignment unit (7) is configured to detect those of the geographical regions (8) in which the current geographical position (6) is located, and to actuate the switching apparatus (11) of the tachograph device (2) in accordance with the respectively allocated configuration (9),
**characterized in that**
the assignment unit (7) is configured as a cryptographic security module that is configured, as a circuit, to apply cryptographic methods that prevent manipulation of the method steps to be performed or of the data stored in the assignment unit (7), and the reception apparatus (3) is configured to receive satellite signals (4) that are secured against manipulations.

2. Tachograph device (2) according to Claim 1,
**characterized in that**
the reception apparatus (3) is configured to receive secure satellite signals (4) in accordance with the Galileo Open Service Navigation Message Authentication standard.

3. Tachograph device (2) according to either of the preceding claims,
**characterized in that**
the tachograph device (2) is configured to store the active functions (10) on a cryptographically secure data storage apparatus (14) of the tachograph device (2).

4. Tachograph device (2) according to one of the preceding claims,
**characterized in that**
the tachograph device (2) is configured to provide the active functions (10) on the data storage apparatus (14) on a data interface (16) of the tachograph device (2).

5. Tachograph device (2) according to one of the preceding claims,
**characterized in that**
the data interface (16) is configured to perform a predetermined authorization checking method in order to check authorization to access the data storage unit.

6. Tachograph device (2) according to one of the preceding claims,
**characterized in that**
the tachograph device (2) is configured to log a driving time on the basis of the geographical region (8) of the current geographical position (6).

7. Tachograph device (2) according to one of the preceding claims,
**characterized in that**
the switching apparatus (11) is configured to switch functions (10) via a vehicle network (12) of the vehicle (1).

8. Tachograph device (2) according to one of the preceding claims,
**characterized in that**
the switching apparatus (11) is configured to switch functions (10) via a vehicle network (12), designed as a CAN bus network, of the vehicle (1).

9. Vehicle (1), comprising a tachograph device (2) according to one of the preceding claims.

10. Method for operating a tachograph device (2) having country-specific functions (10),
**characterized in that**
- a reception apparatus (3) of the tachograph device (2) that is configured to receive satellite signals (4) that are secured against manipulations receives satellite signals (4) and determines a current geographical position (6) from the satellite signals (4),
- an assignment unit (7) that is configured as a cryptographic security module and that is configured, as a circuit, to apply cryptographic methods in order to prevent manipulation of the method steps to be performed or of the data stored in the assignment unit, and in which geographical regions (8) are defined, wherein the respective geographical regions (8) are each allocated a configuration (9), comprising the functions (10) to be activated within the respective geographical region (8), detects those of the geographical regions (8) in which the current geographical position (6) is located, and actuates a switching apparatus (11) of the tachograph device (2) in accordance with the respective allocated configuration (9) in order to switch predetermined functions (10) of the vehicle (1).

## Revendications

1. Dispositif tachygraphique (2) ayant fonctions (10) spécifiques aux pays,
- le dispositif tachygraphique (2) comportant un élément de réception (3) qui est conçu pour recevoir des signaux satellites (4) et pour déterminer une position géographique instantanée (6) à partir des signaux satellites (4),
- le dispositif tachygraphique (2) comportant un élément de commutation (11) qui est conçu pour commuter des fonctions prédéterminées (10) d'un véhicule (1),
- le dispositif tachygraphique (2) comportant une unité d'association (7) dans laquelle des zones géographiques (8) sont définies, une configuration (9) qui comprend les fonctions (10) à activer dans la zone géographique respective (8) étant affectée à la zone géographique respective (8),
- l'unité d'association (7) étant conçue pour détecter celle des zones géographiques (8) dans laquelle se trouve la position géographique instantanée (6), et commander l'élément de commutation (11) du dispositif tachygraphique (2) selon la configuration associée respective (9),
**caractérisé en ce que**
l'unité d'association (7) est conçue comme un module de sécurité cryptographique qui est conçu comme un circuit pour appliquer des procédés cryptographiques qui empêchent la manipulation des étapes de procédé à exécuter ou des données mémorisées dans l'unité d'association (7), et l'élément de réception (3) est conçu pour recevoir des signaux satellites sécurisés contre les manipulation (4).

2. Dispositif tachygraphique (2) selon la revendication 1,
**caractérisé en ce que** l'élément de réception (3) est conçu pour recevoir des signaux satellites sécurisés (4) selon la norme Galileo Open Service Navigation Message Authentification.

3. Dispositif tachygraphique (2) selon l'une des revendications précédentes, **caractérisé en ce que** le dispositif tachygraphique (2) est conçu pour mémoriser les fonctions actives (10) sur un élément de mémorisation de données (14), sécurisé par des moyens cryptographiques, du dispositif tachygraphique (2).

4. Dispositif tachygraphique (2) selon l'une des revendications précédentes, **caractérisé en ce que** le dispositif tachygraphique (2) est conçu pour fournir les fonctions actives (10) sur l'élément de mémorisation de données (14) au niveau d'une interface de données (16) du dispositif tachygraphique (2).

5. Dispositif tachygraphique (2) selon l'une des revendications précédentes, **caractérisé en ce que** l'interface de données (16) est conçue pour mettre en oeuvre un procédé de vérification d'autorisation prédéterminé afin de vérifier l'autorisation d'accès à l'unité de mémorisation de données.

6. Dispositif tachygraphique (2) selon l'une des revendications précédentes, **caractérisé en ce que** le dispositif tachygraphique (2) est conçu pour consigner un temps de parcours en fonction de la zone géographique (8) de la position géographique instantanée (6).

7. Dispositif tachygraphique (2) selon l'une des revendications précédentes, **caractérisé en ce que** l'élément de commutation (11) est conçu pour commuter des fonctions (10) par le biais d'un réseau (12) du véhicule (1).

8. Dispositif tachygraphique (2) selon l'une des revendications précédentes, **caractérisé en ce que** l'élément de commutation (11) est conçu pour commuter des fonctions (10) par le biais d'un réseau (12) du véhicule (1) qui est réalisé sous la forme d'un réseau CAN-BUS.

9. Véhicule (1) comprenant un dispositif tachygraphique (2) selon l'une des revendications précédentes.

10. Procédé de fonctionnement d'un dispositif tachygraphique (2) comportant des fonctions (10) spécifiques aux pays,
**caractérisé en ce que**
- des signaux satellites (4) sont reçus par un élément de réception (3) du dispositif tachygraphique (2) qui est conçu pour recevoir des signaux satellites (4) sécurisés contre les manipulations, et une position géographique instantanée (6) est déterminée à partir des signaux satellites (4),
- une unité d'association (7), conçue comme un module de sécurité cryptographique, est conçue comme un circuit pour appliquer des procédés cryptographiques afin d'empêcher une manipulation des étapes de procédé à exécuter ou des données mémorisées dans l'unité d'association, et des zones géographiques (8) sont définies dans ladite unité d'association, une configuration (9), qui comprend les fonctions (10) à activer dans la zone géographique respective (8) étant associée aux zones géographiques respectives (8), celle des zones géographiques (8) dans laquelle se trouve la position géographique instantanée (6) étant détectée et un élément de commutation (11) du dispositif tachygraphique (2) étant commandé selon la configuration attribuée respective (9) afin de commuter des fonctions prédéterminées (10) du véhicule (1).
